# EUROPÄISCHE PATENTANMELDUNG

(11) **EP 2 026 154 A1**
(43) Veröffentlichungstag der Anmeldung: **18.02.2009**
(21) Anmeldenummer: 07015724.3
(22) Anmeldetag: 09.08.2007
(51) Int. Cl.: G05B 19/409, G06F 3/048

(54) **Bedieneinrichtung zur Bedienung einer Werkzeugmaschine, Produktionsmaschine und/oder einer als Roboter ausgebildeten Maschine**

(71) Anmelder: SIEMENS AKTIENGESELLSCHAFT, 80333 München (DE)
(72) Erfinder: Friedrich, Ralf, 91074 Herzogenaurach (DE); Hertinger, Klaus, 91056 Erlangen (DE); Scheuermann, Uwe, 90431 Nürnberg (DE)

(57) **Zusammenfassung**

Die Erfindung betrifft eine Bedieneinrichtung zur Bedienung einer Werkzeugmaschine, Produktionsmaschine und/oder einer als Roboter ausgebildeten Maschine, wobei die Bedieneinrichtung (1) einen Bildschirm (2) aufweist, wobei vom Bildschirm (2) gleichzeitig ein erstes (3a) und ein zweites Bedienfenster (3b) visualisierbar ist, wobei eine erste Anwendung (4a) zur Bedienung der Maschine in dem ersten Bedienfenster (3a) visualisierbar ist, wobei eine zweite Anwendung (4b) zur Bedienung der Maschine in dem zweiten Bedienfenster (3b) visualisierbar ist, wobei die Bedienung der ersten Anwendung (4a) mittels dem ersten Bedienfenster (3a) zugeordneter erster Bedientasten (5a) erfolgt, wobei die Bedienung der zweiten Anwendung (4b) mittels dem zweiten Bedienfenster (3b) zugeordneter zweiter Bedientasten (5b) erfolgt, wobei die ersten Bedientasten (5a) entlang einer einzelnen oder mehrerer Seiten des ersten Bedienfensters (3a) angeordnet sind, wobei die zweiten Bedientasten (5b) entlang einer einzelnen oder mehrerer Seiten des zweiten Bedienfensters (3b) angeordnet sind. Die Erfindung ermöglicht eine einfache Bedienung einer Werkzeugmaschine, Produktionsmaschine und/oder einer als Roboter ausgebildeten Maschine.

## Beschreibung

Die Erfindung betrifft eine Bedieneinrichtung zur Bedienung einer Werkzeugmaschine, Produktionsmaschine und/oder einer als Roboter ausgebildeten Maschine.

Bei Bedieneinrichtungen zur Bedienung von Werkzeugmaschinen, Produktionsmaschinen und/oder von Robotern wird die Bedienung der Maschine typischerweise über einen Bildschirm und eine Tastatur durchgeführt. Der verfügbare Platz im Bildschirm und die Heute handelsüblich angewendeten Bedienkonzepte haben zur Folge, dass Informationen und Bedienabläufe über mehr oder weniger logisch gegliederte Bedienmenüs strukturiert werden. Dies hat zur Folge, dass bei komplexen Bedienvorgängen häufig zwischen verschiedenen Bedienfenstern, die vom Bildschirm nacheinander auf Tastendruck visualisiert werden und nahezu jeweils den gesamten Bildschirm einnehmen, der Bediener bei handelsüblichen Bedieneinrichtungen hin- und herschalten muss und der Bediener in Folge nur jeweils nur einen Teil der benötigten Informationen sieht. Insbesondere bei Bedienvorgängen, die gleichzeitig die Information und/oder Bedienung unterschiedlicher Maschinenkomponenten erfordern, ist bei handelsüblichen Maschinen ein häufiges Hin- und Herschalten zwischen verschiedenen Bedienfenstern erforderlich.

Der Erfindung liegt die Aufgabe zugrunde, eine einfache Bedienung einer Werkzeugmaschine, Produktionsmaschine und/oder einer als Roboter ausgebildeten Maschine zu ermöglichen.

Diese Aufgabe wird gelöst durch eine Bedieneinrichtung zur Bedienung einer Werkzeugmaschine, Produktionsmaschine und/oder einer als Roboter ausgebildeten Maschine, wobei die Bedieneinrichtung einen Bildschirm aufweist, wobei vom Bildschirm gleichzeitig ein erstes und ein zweites Bedienfenster visualisierbar ist, wobei eine erste Anwendung zur Bedienung der Maschine in dem ersten Bedienfenster visualisierbar ist, wobei eine zweite Anwendung zur Bedienung der Maschine in dem zweiten Bedienfenster visualisierbar ist, wobei die Bedienung der ersten Anwendung mittels dem ersten Bedienfenster zugeordneter erster Bedientasten erfolgt, wobei die Bedienung der zweiten Anwendung mittels dem zweiten Bedienfenster zugeordneter zweiter Bedientasten erfolgt, wobei die ersten Bedientasten entlang einer einzelnen oder mehrerer Seiten des ersten Bedienfensters angeordnet sind, wobei die zweiten Bedientasten entlang einer einzelnen oder mehrerer Seiten des zweiten Bedienfensters angeordnet sind.

Vorteilhafte Ausbildungen der Erfindung ergeben sich aus den abhängigen Ansprüchen.

Es erweist sich als vorteilhaft, wenn vom Bildschirm gleichzeitig ein erstes, zweites, drittes und viertes Bedienfenster visualisierbar ist, wobei eine erste Anwendung zur Bedienung der Maschine in dem ersten Bedienfenster visualisierbar ist, wobei eine zweite Anwendung zur Bedienung der Maschine in dem zweiten Bedienfenster visualisierbar ist, wobei eine dritte Anwendung zur Bedienung der Maschine in dem dritten Bedienfenster visualisierbar ist, wobei eine vierte Anwendung zur Bedienung der Maschine in dem vierten Bedienfenster visualisierbar ist, wobei die Bedienung der ersten Anwendung mittels dem ersten Bedienfenster zugeordneter erster Bedientasten erfolgt, wobei die Bedienung der zweiten Anwendung mittels dem zweiten Bedienfenster zugeordneter zweiter Bedientasten erfolgt, wobei die Bedienung der dritten Anwendung mittels dem dritten Bedienfenster zugeordneter dritter Bedientasten erfolgt, wobei die Bedienung der vierten Anwendung mittels dem vierten Bedienfenster zugeordneter vierter Bedientasten erfolgt, wobei die ersten Bedientasten entlang einer einzelnen oder mehrerer Seiten des ersten Bedienfensters angeordnet sind, wobei die zweiten Bedientasten entlang einer einzelnen oder mehrerer Seiten des zweiten Bedienfensters angeordnet sind, wobei die dritten Bedientasten entlang einer einzelnen oder mehrerer Seiten des dritten Bedienfensters angeordnet sind, wobei die vierten Bedientasten entlang einer einzelnen oder mehrerer Seiten des vierten Bedienfensters angeordnet sind. Hierdurch können vier Anwendungen übersichtlich bedient werden.

Ferner erweist es sich als vorteilhaft, wenn die Bedieneinrichtung zur Bedienung der Maschine gemeinsame Bedientasten aufweist, wobei aus den Bedienfenstern ein Bedienfenster auswählbar ist und den gemeinsamen Bedientasten zuordenbar ist. Die Bedieneinrichtung kann somit neben fest zugeordneten Bedientasten auch sogenannte gemeinsame Bedientasten aufweisen, die einem, z.B. mittels eines Auswahltasters, ausgewählten Bedienfenster zugeordnet werden können.

Weiterhin erweist es sich als vorteilhaft, wenn der Bildschirm als berührungsempfindlicher Bildschirm ausgebildet ist, wobei die Bedientasten oder ein Teil der Bedientasten integraler Bestandteil des Bildschirms sind. Eine Ausführung der Bedientasten als konventionelle mechanische Tasten kann somit entfallen oder zumindest teilweise entfallen, was einen einfachern Aufbau der Bedieneinrichtung ermöglicht. Weiterhin sei an dieser Stelle angemerkt, dass auch der Auswahltaster und die gemeinsamen Bedientasten integraler Bestandteil des Bildschirms sein können. Ein berührungsempfindlicher Bildschirm ermöglicht eine schnelle und direkte (z.B. durch Drücken auf das auszuwählende Bedienfenster) Auswahl des Bedienfensters.

Ferner erweist es sich als vorteilhaft, wenn die Bedientasten außerhalb des Bildschirms angeordnet sind, da die Bedientasten dann besonders stabil aufgebaut sein können. Weiterhin wird eine ergonomische Ausführung der Bedientasten und/oder eine Ausführung der Bedientasten mit Taktilität (taktile Rückmeldung an den Bediener) ermöglicht.

Weiterhin ist es vorteilhaft, eine Werkzeugmaschine, Produktionsmaschine und/oder eine als Roboter ausgebildete Maschine mit der erfindungsgemäßen Bedieneinrichtung auszubilden.

Zwei Ausführungsbeispiele der Erfindung sind in der Zeichnung dargestellt und werden im Folgenden näher erläutert. Dabei zeigen:
FIG 1 eine erste Ausbildung der Erfindung und
FIG 2 eine zweite Ausbildung der Erfindung.

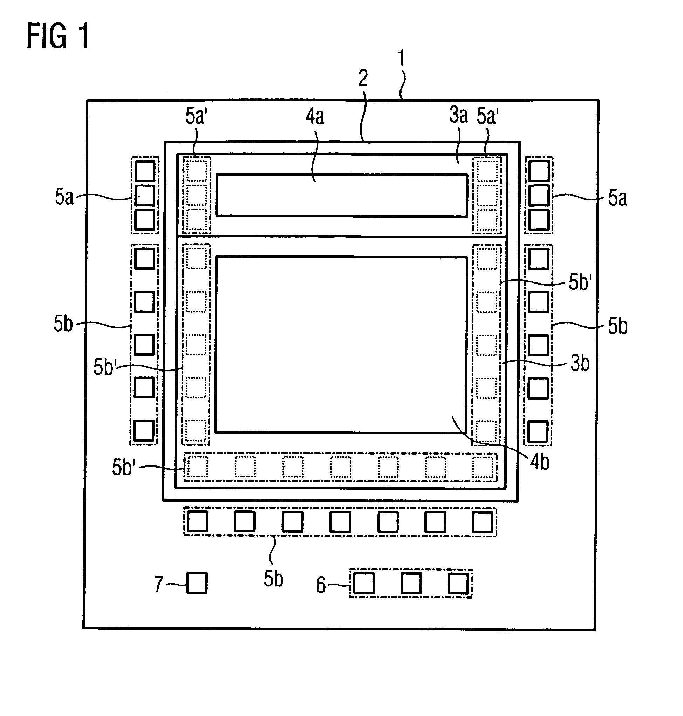

In FIG 1 ist in Form einer schematisierten Darstellung eine erste Ausbildung der erfindungsgemäßen Bedieneinrichtung dargestellt. Die Bedieneinrichtung 1 weist einen Bildschirm 2 auf, wobei vom Bildschirm 2 gleichzeitig ein erstes Bedienfenster 3a und ein zweites Bedienfenster 3b visualisiert werden. In dem ersten Bedienfenster 3a wird eine erste Anwendung 4a zur Bedienung der Maschine in dem ersten Bedienfenster 3a visualisiert und gleichzeitig wird in dem zweiten Bedienfenster 3b eine zweite Anwendung 4b zur Bedienung der Maschine visualisiert. Die erste Anwendung 4a kann z.B. in Form von Applikationen z.B. des Maschinenherstellers vorliegen, wie z.B. eine Funktionen bezüglich der Kühlmittelzufuhr der Maschine oder der Späneförderung darstellen. Mit Hilfe der ersten Anwendung können dann vom Bediener z.B. die hierfür notwendigen Parameter parametriert werden. Die zweite Anwendung 4b kann z.B. die Bedienung von Steuerungsfunktionalitäten des Bearbeitungsvorgangs umfassen. So können z.B. über die zweite Anwendung 4b Steuerungsparameter (wie z.B. Drehgeschwindigkeit eines Werkzeugs) für die Steuerung z.B. zur Bearbeitung eines Werkstücks vom Bediener eingegeben werden. Die zweite Anwendung 4b kann solchermaßen z.B. in Form einer Bedienoberfläche für die Steuerungsfunktionalitäten vorliegen.

Die Bedienung der ersten Anwendung 4a erfolgt mittels dem ersten Bedienfenster 3a zugeordneter erster Bedientasten 5a und die Bedienung der zweiten Anwendung 4b erfolgt mittels dem zweiten Bedienfenster 3b zugeordneten zweiter Bedientasten 5b erfolgt. Im Rahmen des Ausführungsbeispiels sind dabei die ersten Bedientasten 5a und die zweiten Bedientasten 5b entlang mehrerer Seiten des zweiten Bedienfensters 3b angeordnet. Die einzelnen Bedientasten sind dabei in FIG 1 in Form von quadratischen Kästchen schematisiert dargestellt. Durch die feste Zuordnung der Bedientasten entlang einer einzelnen oder mehrerer Seiten eines jeweilig zugeordneten Bedienfensters wird für den Bediener eine einfache und übersichtliche Bedienung der Maschine ermöglicht. Weiterhin kann der Bediener innerhalb einer Bildschirmdarstellung sowohl die erste Anwendung 4a als auch die zweite Anwendung 4b bedienen und im Blick haben ohne diese, wie bei handelsüblichen Maschinen üblich, mit Hilfe z.B. eines Menüs erst nacheinander aufrufen zu müssen.

In FIG 1 sind dabei die ersten Bedientasten 5a links- und rechtsseitig entlang des ersten Bedienfensters 3a angeordnet und die zweiten Bedientasten 5b sind entlang dreier Seiten des zweiten Bedienfensters 3b angeordnet. Selbstverständlich ist es auch denkbar, die Bedientasten nur an einer einzelnen Seite eines Bedienfensters anzuordnen. Dies hängt von der benötigten Anzahl der Bedientasten für die jeweilige Anwendung ab. In FIG 1 ist eine Ausbildung der Erfindung dargestellt, bei der zwei Anwendungen bedient werden. Selbstverständlich ist es jedoch auch möglich, noch mehr Anwendungen (z.B., drei, vier, fünf, sechs usw.) analog zu dem Schema gemäß FIG 1 zu visualisieren.

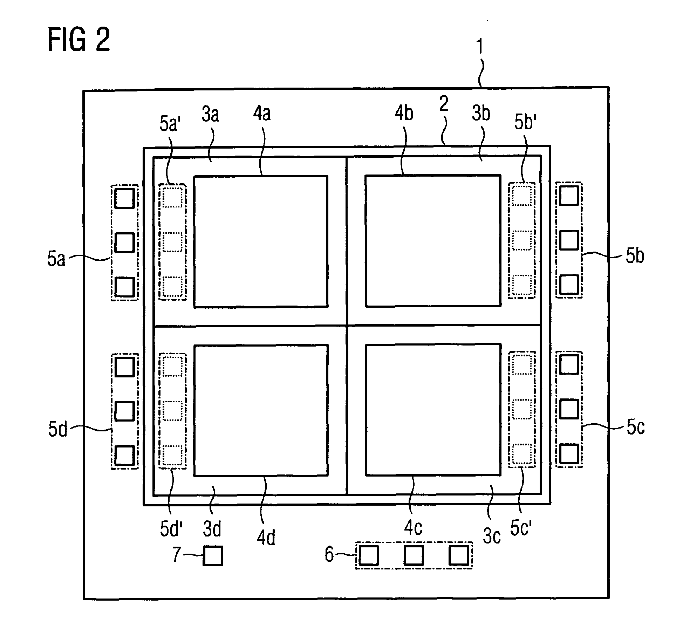

In FIG 2 ist hierzu als Beispiel eine Ausbildung der Erfindung, bei der vier Anwendungen gleichzeitig visualisiert werden, dargestellt, wobei in FIG 2 gleiche Elemente mit gleichen Bezugszeichen versehen sind wie in FIG 1.

Vom Bildschirm 2 der Bedieneinrichtung 1 wird dabei gleichzeitig ein erstes Bedienfenster 3a, ein zweites Bedienfenster 3b, ein drittes Bedienfenster 3c und ein viertes Bedienfenster 3d visualisiert, wobei eine erste Anwendung 4a zur Bedienung der Maschine in den ersten Bedienfenster 3a visualisiert wird, wobei eine zweite Anwendung 4b zur Bedienung der Maschine in den zweiten Bedienfenster 3b visualisiert wird, wobei eine dritte Anwendung 4c zur Bedienung der Maschine in dem dritten Bedienfenster 3c visualisiert wird, wobei eine vierte Anwendung 4d zur Bedienung der Maschine in dem vierten Bedienfenster 3d visualisiert wird, wobei die Bedienung der ersten Anwendung 4a mittels dem ersten Bedienfenster 3a zugeordneter erster Bedientasten 5a erfolgt, wobei die Bedienung der zweiten Anwendung 4b mittels dem zweiten Bedienfenster 3b zugeordneter zweiter Bedientasten 5b erfolgt, wobei die Bedienung der dritten Anwendung 4c mittels den dritten Bedienfenster 3c zugeordneter dritter Bedientasten 5c erfolgt, wobei die Bedienung der vierten Anwendung 4d mittels dem vierten Bedienfenster 3d zugeordneter vierter Bedientasten 5d erfolgt, wobei die ersten Bedientasten 5a entlang einer einzelnen Seite des ersten Bedienfensters 3a angeordnet sind, wobei die zweiten Bedientasten 5b entlang einer einzelnen Seite des zweiten Bedienfensters 3b angeordnet sind, wobei die dritten Bedientasten 5c entlang einer einzelnen Seite des dritten Bedienfensters 3c angeordnet sind, wobei die vierten Bedientasten 5d entlang einer einzelnen Seite des vierten Bedienfensters 3d zugeordnet sind.

Selbstverständlich können die jeweiligen Bedientasten aber auch, je nach Bedarf an Anzahl der Bedientasten, entlang mehrerer Seiten des jeweilig zugeordneten Bedienfensters angeordnet sein.

Bei der Ausbildung der Erfindung gemäß FIG 1 wird der Bildschirm 2 durch die Darstellung der Bedienfenster auf dem Bildschirm in zwei Teile aufgeteilt, während bei der Ausbildung gemäß FIG 2 der Bildschirm 2, entsprechend den vier Bedienfenstern, in vier Teile aufgeteilt wird. Der Bildschirm 2 kann solchermaßen, entsprechend der Anzahl der Bedienfenster aufgeteilt werden.

Die Bedieneinrichtung kann, was in FIG 1 und FIG 2 dargestellt ist, neben den schon beschriebenen, dem jeweiligen Bedienfenster fest zugeordneten Bedientasten, auch sogenannte gemeinsame Bedientasten 6 aufweisen, die mittels eines Auswahltasters 7 einem der vorhandenen Bedienfenster zugeordnet werden können. Der Auswahltaster 7 wird hierzu z.B. mehrmals kurzzeitig gedrückt, wobei nach jedem Drückvorgang ein anderes Bedienfenster verstärkt aufleuchtet und solchermaßen signalisiert, dass das betreffende Bedienfenster und solchermaßen die in dem Bedienfenster visualisierte Anwendung, ausgewählt wurde. Anschließend kann eine Bedienung der solchermaßen ausgewählten Anwendung, mittels der gemeinsamen Bedientasten 6, erfolgen. Die Bedientasten 6 können z.B. zur Eingabe von Parametern dienen. Der Auswahltaster 7 kann auch integraler Bestandteil einer Computermaus sein.

Der Bildschirm 2 kann auch als berührungsempfindlicher Bildschirm (Touchscreen) ausgebildet sein, wobei dann die Bedientasten oder ein Teil der Bedientasten integraler Bestandteil des Bildschirms sein können. In FIG 1 und FIG 2 sind entsprechende Bedientasten 5a', 5b', 5c' und 5d' dargestellt, die alternativ oder zusätzlich zu den außerhalb des Bildschirms 2 angeordneten Bedientasten 5a, 5b, 5c und 5d vorhanden sein können. Weiterhin sei an dieser Stelle angemerkt, dass auch der Auswahltaster 7 und die gemeinsamen Bedientasten 6 integraler Bestandteil des Bildschirms sein können.

Selbstverständlich kann die Bedieneinrichtung nicht nur einen einzelnen sondern auch mehrere Bildschirme mit Bedientastenaufweisen, wobei betreffend der Bildschirme, eine Bedienung und Visualisierung von Anwendungen, entsprechend der Erfindung, in analoger Form erfolgt. Es sei an dieser Stelle angemerkt, dass selbstverständlich, im Falle einer Bedieneinrichtung mit mehreren Bildschirmen, von jedem Bildschirm auch nur eine einzelne Anwendung visualisiert werden kann.

## Patentansprüche

1. Bedieneinrichtung zur Bedienung einer Werkzeugmaschine, Produktionsmaschine und/oder einer als Roboter ausgebildeten Maschine, wobei die Bedieneinrichtung (1) einen Bildschirm (2) aufweist, wobei vom Bildschirm (2) gleichzeitig ein erstes (3a) und ein zweites Bedienfenster (3b) visualisierbar ist, wobei eine erste Anwendung (4a) zur Bedienung der Maschine in dem ersten Bedienfenster (3a) visualisierbar ist, wobei eine zweite Anwendung (4b) zur Bedienung der Maschine in dem zweiten Bedienfenster (3b) visualisierbar ist, wobei die Bedienung der ersten Anwendung (4a) mittels dem ersten Bedienfenster (3a) zugeordneter erster Bedientasten (5a) erfolgt, wobei die Bedienung der zweiten Anwendung (4b) mittels dem zweiten Bedienfenster (3b) zugeordneter zweiter Bedientasten (5b) erfolgt, wobei die ersten Bedientasten (5a) entlang einer einzelnen oder mehrerer Seiten des ersten Bedienfensters (3a) angeordnet sind, wobei die zweiten Bedientasten (5b) entlang einer einzelnen oder mehrerer Seiten des zweiten Bedienfensters (3b) angeordnet sind.

2. Bedieneinrichtung nach Anspruch 1, **dadurch gekennzeichnet, dass** vom Bildschirm (2) gleichzeitig ein erstes (3a), zweites(3b), drittes (3c) und viertes Bedienfenster (3d) visualisierbar ist, wobei eine erste Anwendung (4a) zur Bedienung der Maschine in dem ersten Bedienfenster (3a) visualisierbar ist, wobei eine zweite Anwendung (4b) zur Bedienung der Maschine in dem zweiten Bedienfenster (3b) visualisierbar ist, wobei eine dritte Anwendung (4c) zur Bedienung der Maschine in dem dritten Bedienfenster (3c) visualisierbar ist, wobei eine vierte Anwendung (4d) zur Bedienung der Maschine in dem vierten Bedienfenster (4c) visualisierbar ist, wobei die Bedienung der ersten Anwendung (4a) mittels dem ersten Bedienfenster (3a) zugeordneter erster Bedientasten (5a) erfolgt, wobei die Bedienung der zweiten Anwendung (4b) mittels dem zweiten Bedienfenster (3b) zugeordneter zweiter Bedientasten (5b) erfolgt, wobei die Bedienung der dritten Anwendung (4c) mittels dem dritten Bedienfenster (3c) zugeordneter dritter Bedientasten (5c) erfolgt, wobei die Bedienung der vierten Anwendung (4d) mittels dem vierten Bedienfenster (3d) zugeordneter vierter Bedientasten (5d) erfolgt, wobei die ersten Bedientasten (5a) entlang einer einzelnen oder mehrerer Seiten des ersten Bedienfensters (3a) angeordnet sind, wobei die zweiten Bedientasten (5b) entlang einer einzelnen oder mehrerer Seiten des zweiten Bedienfensters (3b) angeordnet sind, wobei die dritten Bedientasten (5c) entlang einer einzelnen oder mehrerer Seiten des dritten Bedienfensters (3c) angeordnet sind, wobei die vierten Bedientasten (5d) entlang einer einzelnen oder mehrerer Seiten des vierten Bedienfensters (3d) angeordnet sind.

3. Bedieneinrichtung nach einem der vorherigen Ansprüche,
**dadurch gekennzeichnet, dass** die Bedieneinrichtung (1) zur Bedienung der Maschine gemeinsame Bedientasten (6) aufweist, wobei aus den Bedienfenstern ein Bedienfenster auswählbar ist und den gemeinsamen Bedientasten (6) zuordenbar ist.

4. Bedieneinrichtung nach einem der vorherigen Ansprüche,
**dadurch gekennzeichnet, dass** der Bildschirm (2) als berührungsempfindlicher Bildschirm ausgebildet ist, wobei die Bedientasten (5a',5b',5c',5d') oder ein Teil der Bedientasten integraler Bestandteil des Bildschirms (2) sind.

5. Bedieneinrichtung nach einem der Ansprüche 1 bis 3, **dadurch gekennzeichnet, dass** die Bedientasten außerhalb des Bildschirms (2) angeordnet sind.

6. Werkzeugmaschine, Produktionsmaschine und/oder als Roboter ausgebildete Maschine mit einer Bedieneinrichtung nach einem der vorherigen Ansprüche.

## Geänderte Patentansprüche

### Geänderte Patentansprüche gemäss Regel 137(2) EPÜ.

**1.** Bedieneinrichtung zur Bedienung einer Werkzeugmaschine, Produktionsmaschine und/oder einer als Roboter ausgebildeten Maschine, wobei die Bedieneinrichtung (1) einen Bildschirm (2) aufweist, **dadurch gekennzeichnet, dass** vom Bildschirm (2) gleichzeitig ein erstes (3a) und ein zweites Bedienfenster (3b) visualisierbar ist, wobei eine erste Anwendung (4a) zur Bedienung der Maschine in dem ersten Bedienfenster (3a) visualisierbar ist, wobei **gleichzeitig** eine zweite Anwendung (4b) zur Bedienung der Maschine in dem zweiten Bedienfenster (3b) visualisierbar ist, wobei die Bedienung der ersten Anwendung (4a) mittels dem ersten Bedienfenster (3a) **fest** zugeordneter erster Bedientasten (5a) erfolgt, wobei die Bedienung der zweiten Anwendung (4b) mittels dem zweiten Bedienfenster (3b) **fest** zugeordneter zweiter Bedientasten (5b) erfolgt, wobei die ersten Bedientasten (5a) entlang einer einzelnen oder mehrerer Seiten des ersten Bedienfensters (3a) angeordnet sind, wobei die zweiten Bedientasten (5b) entlang einer einzelnen oder mehrerer Seiten des zweiten Bedienfensters (3b) angeordnet sind.

**2.** Bedieneinrichtung nach Anspruch 1, **dadurch gekennzeichnet, dass** vom Bildschirm (2) gleichzeitig ein erstes (3a), zweites(3b), drittes (3c) und viertes Bedienfenster (3d) visualisierbar ist, wobei eine erste Anwendung (4a) zur Bedienung der Maschine in dem ersten Bedienfenster (3a) visualisierbar ist, wobei **gleichzeitig** eine zweite Anwendung (4b) zur Bedienung der Maschine in dem zweiten Bedienfenster (3b) visualisierbar ist, wobei **gleichzeitig** eine dritte Anwendung (4c) zur Bedienung der Maschine in dem dritten Bedienfenster (3c) visualisierbar ist, wobei **gleichzeitig** eine vierte Anwendung (4d) zur Bedienung der Maschine in dem vierten Bedienfenster (4c) visualisierbar ist, wobei die Bedienung der ersten Anwendung (4a) mittels dem ersten Bedienfenster (3a) **fest** zugeordneter erster Bedientasten (5a) erfolgt, wobei die Bedienung der zweiten Anwendung (4b) mittels dem zweiten Bedienfenster (3b) **fest** zugeordneter zweiter Bedientasten (5b) erfolgt, wobei die Bedienung der dritten Anwendung (4c) mittels dem dritten Bedienfenster (3c) **fest** zugeordneter dritter Bedientasten (5c) erfolgt, wobei die Bedienung der vierten Anwendung (4d) mittels dem vierten Bedienfenster (3d) **fest** zugeordneter vierter Bedientasten (5d) erfolgt, wobei die ersten Bedientasten (5a) entlang einer einzelnen oder mehrerer Seiten des ersten Bedienfensters (3a) angeordnet sind, wobei die zweiten Bedientasten (5b) entlang einer einzelnen oder mehrerer Seiten des zweiten Bedienfensters (3b) angeordnet sind, wobei die dritten Bedientasten (5c) entlang einer einzelnen oder mehrerer Seiten des dritten Bedienfensters (3c) angeordnet sind, wobei die vierten Bedientasten (5d) entlang einer einzelnen oder mehrerer Seiten des vierten Bedienfensters (3d) angeordnet sind.

**3.** Bedieneinrichtung nach einem der vorherigen Ansprüche,
**dadurch gekennzeichnet , dass** die Bedieneinrichtung (1) zur Bedienung der Maschine gemeinsame Bedientasten (6) aufweist, wobei aus den Bedienfenstern ein Bedienfenster auswählbar ist und den gemeinsamen Bedientasten (6) zuordenbar ist.

**4.** Bedieneinrichtung nach einem der vorherigen Ansprüche,
**dadurch gekennzeichnet, dass** der Bildschirm (2) als berührungsempfindlicher Bildschirm ausgebildet ist, wobei die Bedientasten (5a',5b',5c',5d') oder ein Teil der Bedientasten integraler Bestandteil des Bildschirms (2) sind.

**5.** Bedieneinrichtung nach einem der Ansprüche 1 bis 3, **da-durch gekennzeichnet** , dass die Bedientasten außerhalb des Bildschirms (2) angeordnet sind.

**6.** Werkzeugmaschine, Produktionsmaschine und/oder als Roboter ausgebildete Maschine mit einer Bedieneinrichtung nach einem der vorherigen Ansprüche.
